# EUROPÄISCHE PATENTSCHRIFT

(11) **EP 1 831 510 B1**
(45) Veröffentlichungstag und Bekanntmachung des Hinweises auf die Patenterteilung: **09.03.2016**
(21) Anmeldenummer: 05846814.1
(22) Anmeldetag: 17.12.2005
(51) Int. Cl.: F01N 3/20, F01N 3/04, F01N 5/02, B01D 53/94, F28F 27/02, F01N 11/00, G01N 31/10

(54) **VERWENDUNG EINER APPARATUR ZUR ERZEUGUNG EINES STROMES HEISSER VERBRENNUNGSABGASE ZUR GEZIELTEN ALTERUNG VON KATALYSATOREN**
USE OF AN APPARATUS FOR PRODUCING A FLOWOF HOT COMBUSTION EXHAUST GASES FOR CONTROLLED AGING OF CATALYTIC CONVERTERS
UTILISATION D'UN APPAREIL POUR PRODUIRE UN FLUX DE GAZ D'ECHAPPEMENT DE COMBUSTION CHAUDS POUR VIELLISSEMENT CIBLE DE POTS CATALYTIQUES

(30) Priorität: 21.12.2004 DE 102004061400
(43) Veröffentlichungstag der Anmeldung: 12.09.2007
(73) Patentinhaber: Umicore AG & Co. KG, 63457 Hanau-Wolfgang (DE)
(72) Erfinder: GIESHOFF, Juergen, 63571 Gelnhausen (DE); FINKBEINER, Hartmut, 72270 Baiersbronn (DE); KREUZER, Thomas, 61184 Karben (DE)
(74) Vertreter: Herrmann, Reinhard
(86) Internationale Anmeldenummer: PCT/EP2005/013618
(87) Internationale Veröffentlichungsnummer: WO 2006/066836

(56) Entgegenhaltungen:
- EP-A- 1 111 212
- DE-A1- 10 043 621
- DE-A1- 10 232 120
- DE-A1- 10 352 265
- DE-U1- 29 611 034
- US-A- 5 264 186
- US-A- 6 009 703
- US-A- 6 141 961
- US-A1- 2004 251 012

## Beschreibung

Die Erfindung betrifft die Verwendung einer Apparatus zur Erzeugung eines Stromes heißer Verbrennungsabgase mit einstellbarer Temperatur zur Alterung von AutoabgasKatalysatoren.

Moderne Katalysatoren zur Reinigung der Abgase von Kraftfahrzeugen müssen eine Lebensdauer über eine Fahrleistung der Fahrzeuge von mindestens 100.000 km gewährleisten. Während der Entwicklung der Katalysatoren sind daher Alterungsverfahren notwendig, die in möglichst kurzer Zeit kostengünstig die über die Lebensdauer des Katalysators auftretenden Belastungen simulieren. Hierbei muß unter anderem die Luftzahl Lambda (λ des Motorabgases nachgebildet werden, mit welchem der Katalysator im Betrieb belastet wird. Die Luftzahl ist das auf stöchiometrische Bedingungen normierte Luft/Kraftstoff-Verhältnis, mit welchem der Motor betrieben wird. Die Luftzahl hat den Wert 1, wenn die zugeführte Ansaugluft gerade für die vollständige Verbrennung des Kraftstoffes ausreicht. Die Luftzahl des vom Motor emittierten Abgases ist gleich der Luftzahl des dem Motor zugeführte Luft/Kraftstoff-Gemisches.

Im Betrieb sind die Katalysatoren im wesentlichen thermischen Belastungen ausgesetzt. Außerdem findet während des Betriebs eine schleichende Vergiftung der Katalysatoraktivität durch Vergiftungsbestandteile im Abgas statt. Beide Alterungsvorgänge lassen sich kostengünstig mit einem Brenner zur Erzeugung eines heißen Abgases nachbilden.

Abgasanlagenhersteller nutzen zum Beispiel Brenner zur Prüfung der thermischen Belastbarkeit der Anlagen. So liefert zum Beispiel die Firma Caloric entsprechende Brennersysteme.

Im Forschungsbericht 08-9217 des Southwest Research Institute, San Antonio, Texas, wird eine Brennerapparatur zur Bestimmung des Einflusses des Motoröls auf die Alterung eines Katalysators beschrieben. Diese Brennerapparatur ist auch Gegenstand der US-Offenlegungsschrift US 2003/0079520 A1 Die Abgastemperatur vor Eintritt in den Katalysator wird mit Hilfe eines Wärmetauschers eingestellt.

Eine alternative Methode beschreibt die Firma CalSim. Beim Heißgaserzeuger CAPS dieser Firma wird das Heißgas durch Verbrennung von Erdgas oder Dieselkraftstoff / Heizöl EL und Zumischung von Kühlluft erzeugt. Die Brennerleistung beträgt 42 bis 90 kW. Die Temperatur ist durch Zumischen von Kühlluft zwischen 300 und 950 °C einstellbar. Die Luftzahl λ des erzeugten Abgases liegt zwischen 2,75 bis 10 und liegt somit immer deutlich im mageren Bereich. Das so erzeugte Abgas ist daher nur bedingt für Untersuchungen zur Alterung von Katalysatoren geeignet, insbesondere Dreiweg-Katalysatoren, die stöchiometrisch betrieben werden, lassen sich hiermit nicht überprüfen.

Eine weitere Anordnung zur Untersuchung der thermischen Alterung von Katalysatoren mit einem Brenner wird in der US-Patentanmeldung US 2002/0112468 A1 beschrieben. Durch die Regelung der Massenströme von Brennstoff und Verbrennungsluft werden Leistung und Luftzahl eingestellt. Ein Wärmetauscher zur variablen Einstellung der Abgastemperatur ist nicht vorgesehen.

Sowohl mit Motoren als auch mit Brennern lassen sich nicht alle abgasrelevanten Parameter einstellen. So sind beim Motor die Abgastemperatur, die Rohemissionen, die Motorleistung und die Luftzahl Lambda (λ) über das vom Fahrer geforderte Drehmoment miteinander gekoppelt. Für die Ersetzung einer motorischen Alterung durch eine Brenneralterung müssen daher möglichst viele Parameter voneinander unabhängig einstellbar sein. Das gilt insbesondere für die Temperatur, die Luftzahl und den Abgasmassenstrom (=Leistung).

Aufgabe der vorliegenden Erfindung ist es, eine Apparatur anzugeben, mit welcher ein Strom heißer Verbrennungsabgase mit einstellbarer Temperatur für die Alterung von Autoabgas-Katalysatoren einfach und kostengünstig erzeugt werden kann. Außerdem sollten Luftzahl und Abgasmassenstrom der Verbrennungsabgase unabhängig von der Temperatur einstellbar sein.

Diese Aufgabe wird dadurch gelöst, daß die aus einem Verbrennungsprozeß stammenden Abgase in einen ersten und einen zweiten Teilstrom mit unterschiedlichen Massenströmen aufgeteilt werden. Der zweite Teilstrom wird abgekühlt und anschließend wieder mit dem ersten Teilstrom zusammengeführt. Der so gebildete Strom heißer Verbrennungsabgase weist eine Temperatur zwischen der Temperatur des Verbrennungsprozesses und der Temperatur des gekühlten Teilstroms auf.

Für die Erzeugung der heißen Verbrennungsabgase können flüssige oder gasförmige, kohlenwasserstoffhaltige Brennstoffen mit Luft verbrannt werden.

Die Massenströme der beiden Teilströme bleiben erhalten, das heißt dem zweiten Teilstrom wird zur Abkühlung kein Kühlgas zugemischt. Durch die Abkühlung ändert sich daher die Luftzahl des zweiten Teilstromes nicht, so daß auch nach Wiederzusammenführung mit dem ersten Teilstrom die Luftzahl mit der am Brenner eingestellten Luftzahl des Verbrennungsprozesses übereinstimmt.

Die Temperatur der erzeugten Verbrennungsabgase hängt von dem Verhältnis der Massenströme der beiden Teilströme und ihrer Temperatur vor der Zusammenführung ab und kann in einfacher Weise durch entsprechendes Drosseln der beiden Teilströme eingestellt werden. Die maximale Temperatur wird durch Drosseln des zweiten Teilstromes bis auf Null und die minimale Temperatur des Verbrennungsgasstromes durch Drosseln des ersten Teilstromes auf Null eingestellt.

Zur Erzeugung der beiden Teilströme wird das vom Verbrennungsprozeß erzeugte Abgas bevorzugt in einen Direktstrom und in einen Umkehrstrom aufgeteilt, wobei der Direktstrom den ersten Teilstrom und der Umkehrstrom den zweiten Teilstrom bildet.

Leistung und Luftzahl Lambda (λ) des Verbrennungsprozesses können weitgehend unabhängig voneinander durch Regeln des Massenstromes m_{B} des Brennstoffes beziehungsweise durch Regeln des Massenstromes m_{L} der Verbrennungsluft eingestellt werden. Die Leistung des Verbrennungsprozesses ist unmittelbar mit der Größe des Abgasmassenstromes verknüpft. Je größer die Leistung, je größer ist auch der Abgasmassenstrom.

Die erzeugten Verbrennungsabgase mit unabhängig voneinander einstellbarer Leistung, Luftzahl und Temperatur werden zur definierten thermischen Alterung von Autoabgaskatalysatoren eingesetzt. Dabei dient die einstellbare Leistung zur Festlegung der Raumgeschwindigkeit, mit welcher die Katalysatoren bei den Alterungsuntersuchungen belastet werden. Durch Regelung von Leistung, Luftzahl und Temperatur können die im Betrieb der Katalysatoren auftretenden Belastungen simuliert werden.

Darüber hinaus ist es möglich, auch Vergiftungsuntersuchungen vorzunehmen. Zu diesem Zweck können dem Brennstoff Öladditive zugefügt werden, deren Bestandteile teilweise als Katalysatorgifte wirken, wie zum Beispiel Phosphor, Schwefel, Zink und Calcium. Weiterhin ist es möglich, der Verbrennungsluft Ammoniak oder eine zu Ammoniak zersetzliche Verbindung zuzufügen, um die zu alternden Katalysatoren mit einer erhöhten Konzentration an Stickoxiden zu belasten.

Häufig wird im Betrieb von Katalysatoren und Rußfiltern eine Nacheinspritzung von Kraftstoffen in das Motorabgas vorgenommen, um die durch den Betrieb beeinträchtigten Eigenschaften von Katalysatoren und Filtern zu regenerieren. Auch diese Belastungen können mit dem vorgeschlagenen Verfahren nachgebildet werden, indem den Verbrennungsabgasen vor Eintritt in den zu alternden Katalysator Benzin oder Dieselkraftstoff zugefügt werden.

Die Erfindung wird im folgenden an Hand der Figuren und des Beispiels näher erläutert. Es zeigen:
- **Figur 1:**: Schematische Darstellung einer Apparatur
- **Figur 2:**: Apparatur
- **Figur 3:**: Alternative Apparatur
- **Figur 4:**: Alterung eines Katalysators durch Belastung mit einem Heißgasstrom mit einer zwischen 150 und 350 °C alternierenden Temperatur
- **Figur 5:**: Unabhängige Regelung von Leistung, Luftzahl und Temperatur des Heißgasstromes

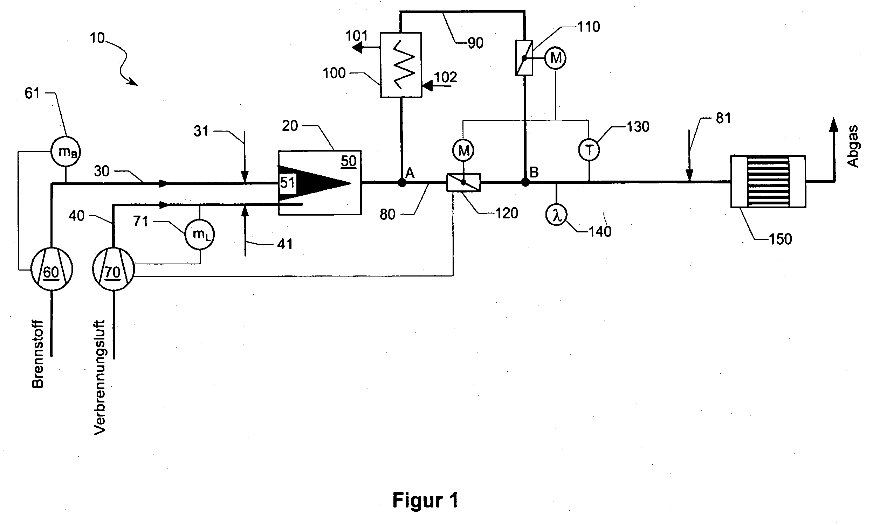

Figur 1 zeigt eine schematische Darstellung einer Apparatur (10) zur Erzeugung eines Stromes heißer Verbrennungsabgases mit einstellbarer Temperatur, Luftzahl und Massenstrom. Die gezeigte Apparatur ist für die Verwendung von flüssigen Brennstoffen wie Dieselkraftstoff, Benzin oder Ethanol ausgelegt. Bei Verwendung von gasförmigen Brennstoffen muß lediglich die Brennstoffpumpe (60) durch einen geeigneten Kompressor ersetzt werden.

Die in Figur 1 dargestellte Apparatur enthält einer Brennereinrichtung (20), die über die Zuführungen (30) und (40) mit Brennstoff beziehungsweise Verbrennungsluft versorgt wird. Der Brennstoff wird über eine Pumpe (60) auf den für den Betrieb des kompletten Systems notwendigen Betriebsdruck gebracht. Der Brennstofffluß m_{B} wird über einen Sensor (61) bestimmt und gemäß den Sollwertvorgaben aus einer nicht gezeigten Steuereinheit über den Brennstoffdruck eingestellt. Der Brennstoff wird in der Brennkammer (50) verbrannt. Der Luftmassenstrom m_{L} wird mit Hilfe des Sensors (71) gemessen und von der Steuereinheit gemäß den Sollwertangaben für die Luftzahl Lambda (λ) über die Drehzahl des Gebläses (70) eingestellt. Der Ist-Wert für die Luftzahl wird vom Sensor (140) vor dem zu prüfenden Katalysator (150) ermittelt.

Das heiße Abgas des Verbrennungsprozesses wird über eine erste Abgasleitung (80) abgeführt. Diese Abgasleitung enthält eine Drosselklappe (120). Eine zweite Abgasleitung (90) bildet eine Umwegleitung zur Drosselklappe (120) der ersten Abgasleitung. Diese zweite Abgasleitung enthält einen Wärmetauscher (100) und ebenfalls eine Drosselklappe (110). Bezugsziffer (101) bezeichnet den Vorlauf und (102) den Rücklauf des Wärmetauschers. Mit den beiden Drosselklappen (110) und (120) können die beiden Massenströme in den Abgasleitungen relativ zueinander verändert werden.

Erste und zweite Abgasleitung sind in Abgasrichtung hinter den Drosselklappen am Punkt B wieder zu einer gemeinsamen Abgasleitung zusammengeführt. In dieser gemeinsamen Leitung ist der zu prüfende Katalysator (150) angeordnet. Kurz vor dem Katalysator befindet sich der Sensor (140) für die Luftzahl (Lambda-Sonde) in der gemeinsamen Abgasleitung. Er dient zur Regelung der Luftzahl auf den gewünschten Wert.

Das Signal eines ebenfalls vor dem Katalysator angeordneten Temperatursensors (130) dient zur Regelung der Temperatur des Abgasstromes vor Eintritt in den Katalysator durch Änderung der Stellung der Drosselklappen der Drosseln (110) und (120). Hierdurch wird das Massenstromverhältnis der beiden Teilströme verändert und damit die gewünschte Temperatur vor dem Katalysator eingestellt.

Die Sensoren und insbesondere der regelungsrelevanten Sensoren können je nach Anwendungsfall an unterschiedlichen Positionen eingesetzt werden. So kann es zum Beispiel wünschenswert sein, auf eine konstante Temperatur nach Katalysator zu regeln oder das Lambda-Signal vor beziehungsweise nach der Injektionsstelle (81) zu messen. Mit Hilfe dieser Apparatur können Temperatur, Luftzahl und Massenstrom der Verbrennungsabgase in einfacher Weise unabhängig voneinander eingestellt werden. Sie eignet sich daher hervorragend für die Alterung von Katalysatoren. Es hat sich gezeigt, daß so gealterte Katalysatoren bei der Prüfung ihrer katalytischen Aktivität am Fahrzeug ähnliche Eigenschaften wie am Motor gealterte Katalysatoren aufweisen.

Zur Simulation der Vergiftung von Autoabgaskatalysatoren mit Vergiftungselementen aus Öladditiven ist in der Brennstoffzuführung (30) eine Injektionsstelle (31) für gasförmige oder flüssige Additive, insbesondere für Öladditive, vorgesehen. Ebenso weist die Verbrennungsluftzuführung (40) eine Injektionsstelle (41) für gasförmige oder flüssige Additive auf, insbesondere für Ammoniak oder einer zu Ammoniak zersetzbaren Verbindung wie zum Beispiel Harnstoff. Weiterhin besitzt auch die Abgasleitung (80) eine Injektionsstelle (81) für gasförmige oder flüssige Additive wie zum Beispiel Benzin, Dieselkraftstoff oder Harnstofflösung für eine realitätsnahe Alterung von SCR-Katalysatoren

Anzahl und Ort der Injektionsstellen können nach Bedarf gewählt werden. So kann es zum Beispiel sinnvoll sein, zwei Injektionsstellen für die Abgasleitung vorzusehen, um Kraftstoff und Luft einzudüsen. Für die Injektion können sowohl Einstoffdüsen als auch Zweistoffdüsen eingesetzt werden.

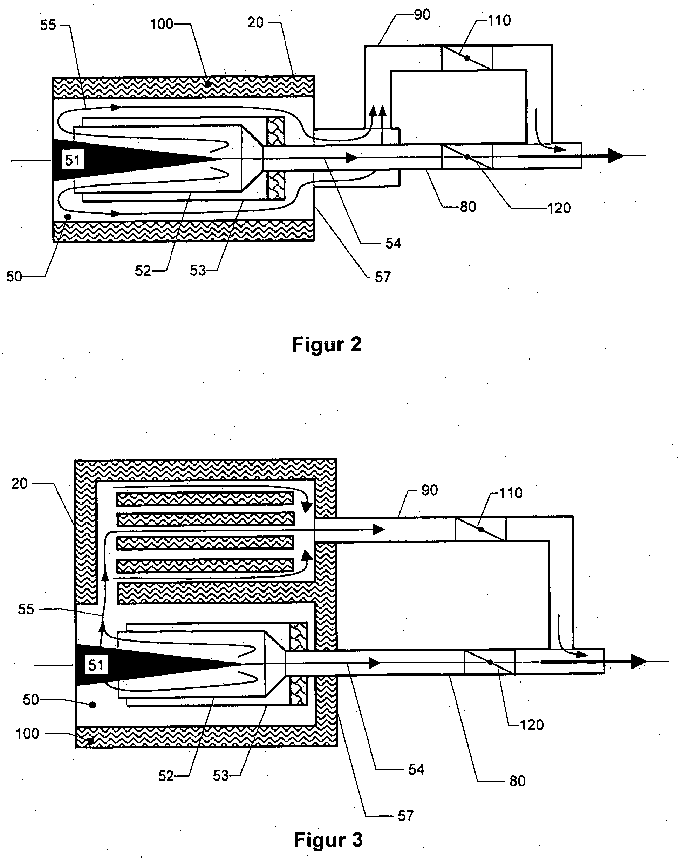

Wie in Figur 1 gezeigt, kann die Auftrennung des vom Brenner erzeugten Abgases in die beiden Teilströme hinter der Brennereinrichtung am Punkt A erfolgen. Bevorzugt wird die Aufteilung jedoch schon direkt in der Brennereinrichtung selbst vorgenommen. In diesem Fall bildet der Wärmetauscher einen ersten Abschnitt in der zweiten Abgasleitung. Bevorzugte Ausführungsformen hiervon zeigen die Figuren 2 und 3. Beide Ausführungsformen können durch Umbau kommerzieller Heizkessel erhalten werden. Solche Heizkessel weisen eine Brennkammer (50) auf, in der die Brennereinrichtung angeordnet ist. Die Brennkammer ist gewöhnlich wassergekühlt und ist Teil des Wärmetauschers des Heizkessels. Bevorzugt werden Heizkessel mit einer sogenannten Umkehrfeuerung verwendet. Das Abgas eines solchen Kessels bildet einen Umkehrstrom (55) und gibt seine Wärme an den Wärmetauscher ab. Dieser Umkehrstrom wird als zweiter Teilstrom des Verfahrens genutzt. Zur Erzeugung des ersten Teilstromes von Verbrennungsabgasen muß die brennerabgewandte Rückwand (57) des Heizkessels durchbohrt werden. Durch diese Bohrung wird ein Teil des vom Brenner erzeugten Abgases als Direktstrom (54) aus der Brennkammer ausgeleitet.

Der Wärmetauscher des Heizkessels bildet den für die Abkühlung des zweiten Teilstromes benötigten Wärmetauscher (100). Im Falle von Figur 2 handelt es sich dabei lediglich um die die Brennereinrichtung umgebenden, wassergekühlten Kesselwände. Im Falle von Figur 3 ist der Wärmetauscher als Rohrbündelwärmetauscher nach dem Gegenstromprinzip aufgebaut und direkt über der Brennkammer angeordnet.

Die Brennerflamme (51) wird in Figur 2 und 3 von einem konzentrisch angeordneten Rohr (52) geführt. Dieses Rohr mündet in die erste Abgasleitung (80) und versorgt diese mit dem ersten Abgasstrom. Zur Wahrung einer großen Regelungsbreite für die Temperatur sollte dieser Abgasstrom den Heizkessel möglichst ungekühlt mit der Verbrennungstemperatur verlassen. Daher ist es vorteilhaft, um das Rohr (52) herum ein Strahlungsschutzschild (53) anzuordnen, welches Strahlungsverluste von diesem Rohr an die wassergekühlten Wände der Brennkammer minimiert.

Der für das Verfahren benötigte Wärmetauscher kann als Gas/Gas-Wärmetauscher ausgebildet sein. Vorteilhafter ist es jedoch, einen Gas/Wasser-Wärmetauscher zu verwenden, wie er standardmäßig bei kommerziellen Heizkesseln eingesetzt wird. Dadurch ergibt sich eine geringe notwendige Wärmetauscherfläche und somit ein kompakter Gesamtaufbau. Durch die Integration des Wärmetauschers in den Brenneraufbau ergeben sich sicherheitstechnisch ganz wichtige Vorteile. Wird der Wärmetauscher so ausgeführt, daß die gesamte Brennkammer von Wasser umschlossen ist (z. B. durch einen konzentrischen Aufbau um die Brennerflamme), so kann die maximale Temperatur an der Außenfläche leicht auf Werte unter 80 °C begrenzt werden, obgleich die Temperatur des Heißgasstromes zwischen 80 und 800 °C einstellbar ist. Um Kondensationsprobleme zu vermeiden, wird der Wärmetauscher (100) bei einer Temperatur des Rücklaufs (102) oberhalb des Taupunktes des Abgases betrieben. Der Taupunkt ist eine Funktion der Brennerluftzahl und beträgt bei einer Luftzahl von 1 etwa 65 °C.

Die minimale Temperatur der Verbrennungsäbgase wird bestimmt durch die Auslegung des Wärmetauschers. Werden sehr niedrige Temperaturen benötigt, so kann die Aufteilung des Wärmetauschers in mehrere Abschnitte sinnvoll sein.

Die Apparatur kann für Heißgastemperaturen zwischen 80 und 1200 °C bei Heizleistungen zwischen 2 und 5000 kW ausgelegt werden. Praktisch realisiert wurde eine Alterungsapparatur für einen Regelungsbereich der Temperatur der Verbrennungsabgase zwischen 80 und 900 °C mit einer Leistung von 30 bis 60 kW. Mit einer weiteren Apparatur konnte bei Brennerleistungen zwischen 150 und 500 kW ein Regelungsbereich für die Temperatur der Verbrennungsabgase zwischen 200 und 1000 °C mit Luftzahlen von 0,9 bis 1,8 verwirklicht werden.

### Beispiel 1:

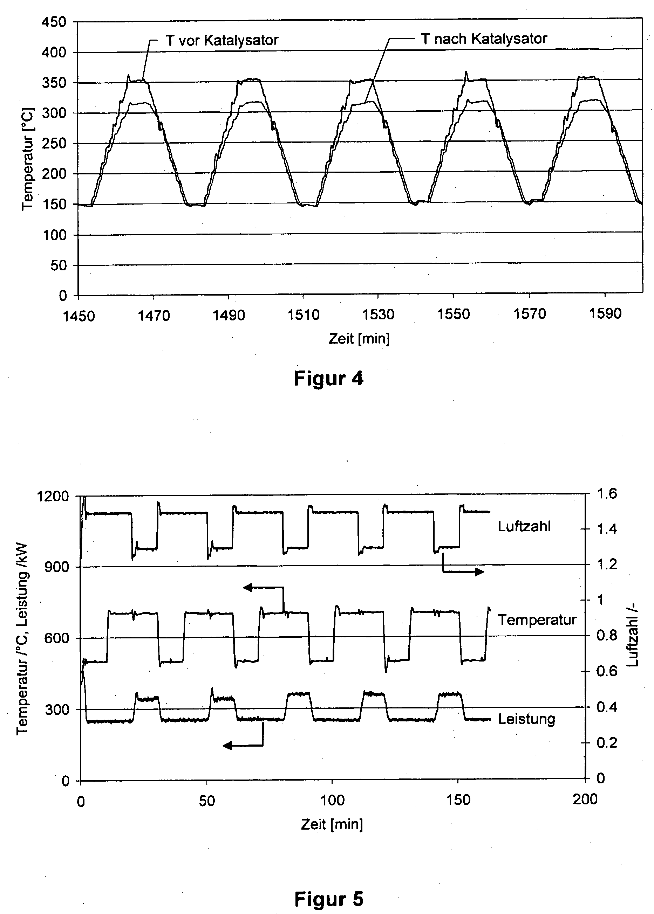

Figur 4 zeigt beispielhaft die ausgezeichnete Regelbarkeit der Temperatur der erzeugten Verbrennungsabgase mit der Apparatur nach Figur 2. Es wurde ein Ölbrenner mit einer Nennleistung von 60 kW verwendet um einen Diesel-Oxidationskatalysator mit heißen Verbrennungsabgasen zu belasten. Die Temperatur der Abgase wurde trapezförmig zwischen 150 und 350 °C zyklisch geändert. Figur 1 zeigt den Temperaturverlauf vor Katalysator sowie den Temperaturverlauf nach Katalysator.

### Beispiel 2:

Eine Apparatur gemäß Figur 3 wurde mit einem Ölbrenner mit 500 kW Nennleistung ausgestattet. In einem Testlauf wurden Leistung, Luftzahl und Temperatur unabhängig voneinander geregelt. Während des Testlaufs wurde das in Tabelle 1 aufgelistete Testprotokoll jeweils fünfmal durchlaufen.

**Tabelle 1: Sollwerte für Leistung, Luftzahl und Temperatur während eines Testlaufs**

| Dauer /min | Leistung /kW | Luftzahl /- | Temperatur /°C |
|---|---|---|---|
| 10 | 250 | 1,5 | 500 |
| 10 | 250 | 1,5 | 700 |
| 10 | 350 | 1,3 | 700 |

Die gemessenen Werte für Leistung, Luftzahl und Temperatur in Abhängigkeit von der Zeit sind in Figur 5 dargestellt. Die Kurven von Figur 5 belegen die gute Regelbarkeit der genannten Verfahrensparameter mit dem erfindungsgemäßen Verfahren.

## Patentansprüche

1. Verwendung einer Apparatur (10) zur Erzeugung eines Stromes heißer Verbrennungsabgase mit unabhängig voneinander einstellbarer Leistung, Luftzahl und Temperatur, welche aus einem Verbrennungsprozess stammen, enthaltend eine Brennereinrichtung (20) mit einer Brennstoffzuführung (30) und einer Verbrennungsluftzuführung (40) sowie einer Brennkammer (50), wobei
a) ein Teil des von der Brennereinrichtung (20) erzeugten Abgases über eine erste Abgasleitung (80) mit einer Drosselklappe (120) abgeführt wird,
b) die Drosselklappe (120) von einer zweiten Abgasleitung (90) umgangen wird, die einen Wärmetauscher (100) und eine weitere Drosselklappe (110) ausweist, und
c) beide Abgasleitungen in Strömungsrichtung des Abgases hinter den Drosselklappen zu einer gemeinsamen Abgasleitung zusammengeführt sind,
**dadurch gekennzeichnet,**
**dass** der Strom heißer Verbrennungsabgase zur definierten, thermischen Alterung von Autoabgaskatalysatoren eingesetzt wird.

2. Verwendung nach Anspruch 1,
**dadurch gekennzeichnet,**
**dass** die Brennstoffzuführung (30) eine Injektionsstelle (31) für gasförmig oder flüssige Additive aufweist.

3. Verwendung nach Anspruch 1,
**dadurch gekennzeichnet,**
**dass** die Verbrennungsluftzuführung (40) eine Injektionsstelle (41) für gasförmige oder flüssige Additive aufweist.

4. Verwendung nach Anspruch 1,
**dadurch gekennzeichnet,**
**dass** die Abgasleitung (80) eine Injektionsstelle (81) für gasförmige oder flüssige Additive aufweist.

5. Verwendung nach Anspruch 2,
**dadurch gekennzeichnet,**
**dass** dem Brennstoff über die Injektionsstelle (31) Öladditive zugefügt werden, um die zu alternden Katalysatoren mit den daraus resultierenden Vergiftungskomponenten zu belasten.

6. Verwendung nach Anspruch 3,
**dadurch gekennzeichnet,**
**dass** der Verbrennungsluft über die Injektionsstelle (41) Ammoniak oder eine zu Ammoniak zersetzliche Verbindung zugefügt wird, um die zu alternden Katalysatoren mit einer erhöhten Konzentration an Stickoxiden zu belasten.

7. Verwendung nach Anspruch 4,
**dadurch gekennzeichnet,**
**dass** dem Abgasstrom über die Injektionssteslle (81) Kohlenwasserstoffe zugeneigt werden.

8. Verwendung nach einem oder mehreren der vorhergehenden Ansprüche,
**dadurch gekennzeichnet,**
**dass** die Brennereinrichtung (20) einen Brenner aufweist, dessen Leistung moduliert werden kann,

9. Verwendung nach einem oder mehreren der vorhergehenden Ansprüche,
**dadurch gekennzeichnet,**
**dass** die Brennereinrichtung nach dem Prinzip der Umkehrfeuerung arbeitet, wobei allerdings ein direkter Teilstrom des Abgases über die erste Abgasleitung abgeleitet und der Umkehrstrom über die zweite Abgasleitung geführt wird.

## Claims

1. Use of an apparatus (10) for generating a flow of hot combustion exhaust gases which originate from a combustion process and have output, air-fuel ratio and temperature which can be adjusted independently of each other, said apparatus containing a burner device (20) having a fuel feed (30) and a combustion air feed (40) and also a combustion chamber (50), wherein
a) some of the exhaust gas generated by the burner device (20) is discharged via a first exhaust gas pipe (80) having a throttle valve (120),
b) the throttle valve (120) is bypassed by a second exhaust gas pipe (90), which has a heat exchanger (100) and a further throttle valve (110), and
c) both exhaust gas pipes are combined downstream of the throttle valves, as considered in the flow direction of the exhaust gas, to form a common exhaust gas pipe,
**characterized in that**
the flow of hot combustion exhaust gases is used for the defined thermal ageing of automotive exhaust gas catalysts.

2. Use according to Claim 1,
**characterized in that**
the fuel feed (30) has an injection point (31) for gaseous or liquid additives.

3. Use according to Claim 1,
**characterized in that**
the combustion air feed (40) has an injection point (41) for gaseous or liquid additives.

4. Use according to Claim 1,
**characterized in that**
the exhaust gas pipe (80) has an injection point (81) for gaseous or liquid additives.

5. Use according to Claim 2,
**characterized in that**
oil additives are added to the fuel via the injection point (31) in order that the catalysts to be aged are encumbered with the contamination components resulting therefrom.

6. Use according to Claim 3,
**characterized in that**
ammonia or a compound that decomposes to form ammonia is added to the combustion air via the injection point (41) in order to subject the catalysts to be aged to an increased concentration of nitrogen oxides.

7. Use according to Claim 4,
**characterized in that**
hydrocarbons are added to the exhaust gas flow via the injection point (81).

8. Use according to one or more of the preceding claims,
**characterized in that**
the burner device (20) has a burner whose output can be modulated.

9. Use according to one or more of the preceding claims,
**characterized in that**
the burner device operates in accordance with the principle of reversed firing, wherein, however, a direct sub-flow of the exhaust gas is discharged via the first exhaust gas pipe and the reverse flow is routed via the second exhaust gas pipe.

## Revendications

1. Utilisation d'un appareil (10) pour la production d'un courant de gaz d'échappement de combustion chauds présentant une puissance, un facteur d'air et une température pouvant être réglés de manière indépendante les uns des autres, provenant d'un processus de combustion, contenant un dispositif de brûleur (20) présentant une alimentation en carburant (30) et une alimentation en air de combustion (40) ainsi qu'une chambre de combustion (50),
a) une partie du gaz d'échappement produit par le dispositif de brûleur (20) étant évacuée via une première conduite de gaz d'échappement (80) pourvue d'un clapet d'étranglement (120),
b) le clapet d'étranglement (120) étant contourné par une deuxième conduite de gaz d'échappement (90), qui présente un échangeur de chaleur (100) et un autre clapet d'étranglement (110) et
c) les deux conduites de gaz d'échappement étant réunies dans le sens d'écoulement du gaz d'échappement derrière les clapets d'étranglement en une conduite de gaz d'échappement commune,
**caractérisée en ce**
**que** le courant de gaz d'échappement de combustion chauds est utilisé pour un vieillissement thermique défini de convertisseurs catalytiques de gaz d'échappement d'automobiles.

2. Utilisation selon la revendication 1,
**caractérisée en ce**
**que** l'alimentation en carburant (30) présente un site d'injection (31) pour additifs liquides ou sous forme gazeuse.

3. Utilisation selon la revendication 1,
**caractérisée en ce**
**que** l'alimentation en air de combustion (40) présente un site d'injection (41) pour additifs liquides ou sous forme gazeuse.

4. Utilisation selon la revendication 1,
**caractérisée en ce**
**que** la conduite de gaz d'échappement (80) présente un site d'injection (81) pour additifs liquides ou sous forme gazeuse.

5. Utilisation selon la revendication 2,
**caractérisée en ce**
**que** des additifs pour huile sont ajoutés au carburant via le site d'injection (31), afin de charger les convertisseurs catalytiques à faire vieillir de composants toxiques qui en résultent.

6. Utilisation selon la revendication 3,
**caractérisée en ce**
**que** de l'ammoniac ou un composé décomposable en ammoniac est ajouté à l'air de combustion via le site d'injection (41), afin de charger les convertisseurs catalytiques à faire vieillir d'une concentration accrue en oxydes d'azote.

7. Utilisation selon la revendication 4
**caractérisée en ce**
**que** des hydrocarbures sont ajoutés au courant de gaz d'échappement via le site d'injection (81).

8. Utilisation selon une ou plusieurs des revendications précédentes,
**caractérisée en ce**
**que** le dispositif de brûleur (20) présente un brûleur, dont la puissance peut être modulée.

9. Utilisation selon une ou plusieurs des revendications précédentes,
**caractérisée en ce**
**que** le dispositif de brûleur fonctionne selon le principe de combustion inverse, un courant partiel direct du gaz d'échappement étant cependant dérivé via la première conduite de gaz d'échappement et le courant inverse étant guidé via la deuxième conduite de gaz d'échappement.
